# EUROPÄISCHE PATENTSCHRIFT

(11) **EP 0 572 608 B1**
(45) Veröffentlichungstag und Bekanntmachung des Hinweises auf die Patenterteilung: **24.07.1996**
(21) Anmeldenummer: 93900105.3
(22) Anmeldetag: 18.12.1992
(51) Int. Cl.: B60R 22/32

(54) **NOTAUSRÜSTUNG FÜR KRAFTFAHRZEUGE**
EMERGENCY EQUIPMENT FOR MOTOR VEHICLES
EQUIPEMENT DE SECOURS POUR VEHICULES AUTOMOBILES

(30) Priorität: 27.12.1991 CH 3840/91
(43) Veröffentlichungstag der Anmeldung: 08.12.1993
(73) Patentinhaber: BOSSHARD, Charles, Ch-3263 Büetigen (CH)
(72) Erfinder: BOSSHARD, Charles, Ch-3263 Büetigen (CH)
(74) Vertreter: Faltas Mikhail, William
(86) Internationale Anmeldenummer: EP9202947
(87) Internationale Veröffentlichungsnummer: WO9312956

(56) Entgegenhaltungen:
- EP-A- 0 070 439
- CH-A- 537 823
- DE-A- 2 605 477
- DE-A- 2 826 749
- DE-A- 2 944 879
- US-A- 4 592 467

## Beschreibung

Die vorliegende Erfindung betrifft eine Notausrüstung für Kraftfahrzeuge mit einem mehrteiligen Hohlkörper und verschiedenem Zubehör zur Benutzung bei Verkehrsunfällen.

Die Insassen von Fahrzeugen, die zum Stillstand kommen, sind bekanntlich bei reduzierter Sicht, schlechten Strassenverhältnissen und dichtem Verkehr besonders gefährdet, wobei die vorgeschriebenen Warndreiecke in manchen Fällen keinen ausreichenden Schutz bieten können, zumal sie entweder schwer zugänglich oder beschädigt sind, falsch aufgestellt werden, oder sogar manchmal überhaupt nicht vorhanden sind.

Die Insassen von Kraftfahrzeugen werden ferner nach Verkehrsunfällen in manchen Fällen dadurch gefährdet, dass sie die Sicherheitsgurte nicht lösen, die Türen oder Fenster nicht öffnen und sich damit nicht aus dem Fahrzeug befreien können.

Zudem kommt die Hilfe bei Verkehrsunfällen nicht immer rechtzeitig, um weitere Unfälle zu vermeiden.

Die Unfallaufnahme nach einem Verkehrsunfall ist ausserdem erforderlich aber oft sehr schwierig und unsicher, wobei das dafür notwendige Material (Unfallprotokoll, Schreibstift, Messband, Ölkreide, Lampe usw.) entweder fehlt oder schwer zugänglich ist. Unter anderem besteht insbesondere bei schlechtem Wetter und schlechten Strassenverhältnissen die Gefahr, dass mehrere Fahrzeuge aufeinanderfahren.

Es wird heute im Handel eine sehr grosse und zunehmende Vielfalt von Fahrzeugzubehör zur Benutzung bei Verkehrsunfällen angeboten. Zu diesem Zweck sind zunächst als Zubehör zum Anzeigen von Unfallstellen verschiedene Warndreiecke, Signalleuchten, Warnlampen unter anderem vorgesehen. Ferner sind als Zubehör zum Befreien der Fahrzeuginsassen im Notfall verschiedene spezielle Messer und Hammer zum Durchschneiden von Sicherheitsgurten bzw. zum Zerschlagen von Fahrzeugfenstern vorgesehen. Weiter sind für die Unfallaufnahme Unfallprotokolle, Stifte, Kreiden, kleine Lampen, Messbänder usw. vorgesehen. Ausserdem sind für die erste Hilfe Verbandmaterial usw. vorgesehen.

Die Aufbewahrung von solchem verschiedenartigen Zubehör im Fahrzeug, so dass es stets unbeschädigt und im Notfall griffbereit bleibt, ist jedoch bekanntlich äusserst problematisch. Die Autofahrer wissen bereits aus Erfahrung, dass ein herkömmliches Warndreieck von wenig Nutzen ist, wenn es nicht unbeschädigt und leicht zugänglich im Kofferraum verstaut wird.

Aus der gattungsbildenden CH-A-587283 ist ein Unfall- und Pannensignal bestehend aus zwei teleskopartig ineinander schiebbaren Hohlprofilen bekannt, welche mit fluoreszierenden und/oder reflektierenden Materialien ausgerüstet sind und am Boden- und Deckelement je einen Haftmagneten aufweisen.

Es wird dabei erwähnt, dass der in sich abgeschlossene Rundkörper mit kleinerem Durchmesser zur Aufbewahrung des Unfallbestecks wie Messband, Kreide, Instruktionen über erste Hilfe, Verbandmaterial usw vorgesehen ist. Es wird ferner erwähnt, dass die Ausrüstung mit Magneten das Anbringen an Autokarosserien, Wagenhebern, Leitplanken usw. erlaubt.

Ferner ist aus DE-A-2826749 eine Gurtdurchtrennungsvorrichtung bekannt, die gleichzeitig als Beleuchtungsvorrichtung sowie als Stoss- und Schlagvorrichtung vorgesehen ist.

Aus US-A-4592467 ist ferner ein Werkzeug zum Zerschlagen von Fenstern bei einem Verkehrsunfall bekannt, das mit einem Hammer und einem Messer zum Durchschneiden von Sicherheitsgurten an gegenüberliegenden Enden eines Handgriffs versehen ist.

Die oben genannten Lösungen können jedoch jeweils den eingangs erwähnten Problemen und Gefahren in bezug auf die rasche Befreiung der Fahrzeuginsassen, das Signalisieren der Unfallstelle, die Unfallaufnahme usw. nur teilweise Rechnung tragen.

Die Aufgabe der vorliegenden Erfindung besteht darin, eine Notausrüstung für Kraftfahrzeuge zu schaffen, die insbesondere bei Verkehrsunfällen den Fahrzeuginsassen einen verbesserten Schutz bietet und den oben erwähnten Problemen und Gefahren weitgehend Rechnung trägt.

Diese Aufgabe wird durch eine Notausrüstung gelöst, die einen geschlossenen, mehrteiligen Hohlkörper und verschiedenes Zubehör zur Benutzung bei Verkehrsunfällen und insbesondere die im Patentanspruch 1 definierten Merkmalen aufweist.

Diese Notausrüstung ist dadurch gekennzeichnet, dass der Hohlkörper aus mehreren Abschnitten besteht, die stirnseitig mit Hilfe von lösbaren Verbindungselementen miteinander fest verbunden sind und einen starren Hohlstab mit einem länglichen hohlen Endabschnitt bilden, wobei dieser Endabschnitt mit einem Schlagkopf und einem Messer derart ausgerüstet ist, dass der starre Hohlstab als ganzes unmittelbar zur raschen Befreiung der Fahrzeuginsassen im Notfall eingesetzt werden kann, indem die Sicherheitsgurte mit diesem Messer durchschnitten und die Fenster des Fahrzeugs mit diesem Schlagkopf zerschlagen werden.

Dieser längliche Endabschnitt ist speziell ausgebildet und bemessen, um ein zusammengerolltes Unfallprotokoll sowie weiteres spezielles Zubehör für die Unfallaufnahme, insbesondere ein zusammenlegbares Warndreieck, Stifte und eine kleine Lampe in diesem Endabschnitt aufzunehmen, wobei dieser Endabschnitt ein offenes inneres Ende aufweist, das für die feste Verbindung mit einem angrenzenden, zweiten Abschnitt des Hohlstabs mittels entsprechender, lösbarer Verbindungselemente sowie für die Entnahme des Unfallprotokolls und des weiteren speziellen Zubehörs für die Unfallaufnahme vorgesehen ist.

Die einzelnen Abschnitte des Hohlstabs sind jeweils zum Aufbewahren von verschiedenem speziellen Zubehör zur Verwendung im Notfall durch Lösen der genannten Verbindungselemente vorgesehen.

Der genannte Endabschnitt ist vorteilhaft in zwei koaxiale Kammern so unterteilt, dass eine äussere, ringförmige Kammer ein zusammengerolltes Unfallprotokoll und eine zentrale Kammer ein zusammenlegbares Warndreieck aufnehmen kann.

Der genannte erste Endabschnitt weist ausserhalb der äusseren, ringförmigen Kammer vorteilhaft mehrere Längsbohrungen zur Aufnahme von Ölkreiden bzw. Stiften und einer kleinen Lampe auf. Diese Längsbohrungen können als Element einer Steckverbindung des nächsten Abschnittes oder eines entsprechenden Deckels vorgesehen sein.

Das genannte Messer ist vorzugsweise auf der Innenseite eines am Ende des ersten Endabschnitts befestigten Clips angebracht, welcher im Notfall unter einem gespannten Sicherheitsgurt geschoben werden kann, um diesen zu durchschneiden.

Eine Messbandrolle bildet vorzugsweise einen Abschnitt des Hohlstabs, so dass das Messband direkt verfügbar ist.

Eine Einwegkamera mit Blitzlicht und eine Blinkleuchte oder Blitzleuchte bilden vorzugsweise entsprechende Abschnitte des Hohlstabs.

Die Erfindung wird nun anhand eines Ausführungsbeispiels und der beiliegenden Zeichnung erläutert, die folgendes darstellt.

Fig. 1 zeigt einen Teil-Längsschnitt nach I-I in Fig. 2 der erfindungsgemässen Notausrüstung für Kraftfahrzeuge nach einem Ausführungsbeispiel.

Fig. 2 zeigt eine Teilansicht der Notausrüstung nach Fig. 1.

Fig. 3 zeigt einen Schnitt nach III-III in Fig. 1.

Fig. 4 zeigt einen Teilschnitt eines Beispiels eines Verbindungsteils der Notausrüstung nach Fig. 3.

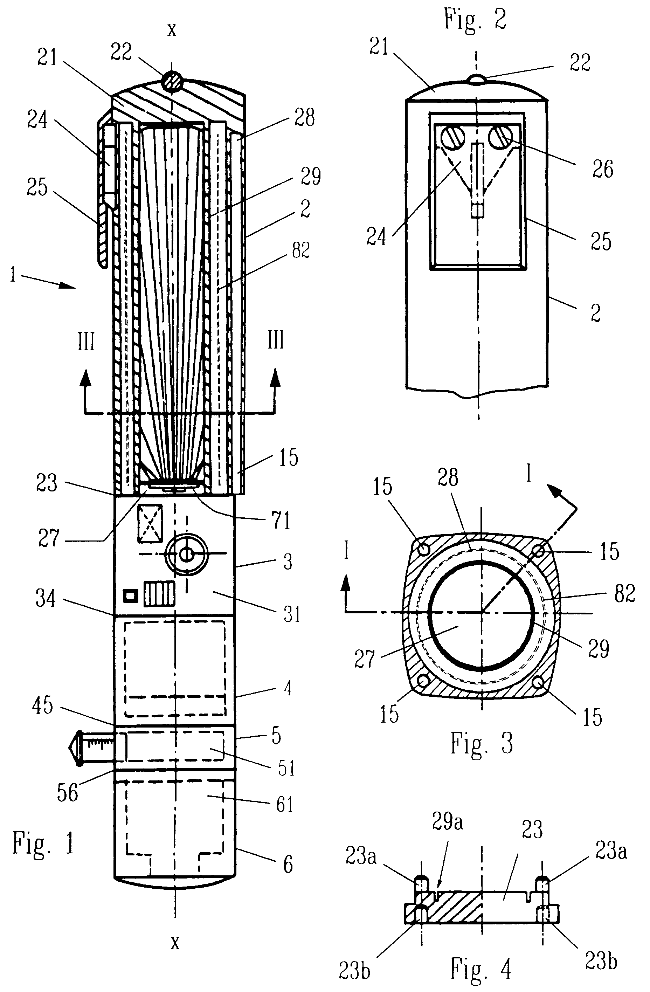

Die in Fig. 1 schematisch dargestellte Notausrüstung bildet im wesentlichen einen mehrteiligen Hohlstab 1, der bei diesem Ausführungsbeispiel aus 5 aneinander geschlossenen Abschnitten des Hohlstabs 2 bis 6 mit rechteckigem Querschnitt besteht, die auf einer Längsachse X ausgerichtet sind, wobei sie mit Hilfe von Verbindungselementen miteinander fest verbunden sind, die durch die Linien 23, 34, 45, 56 nur schematisch angedeutet sind.

Der längliche erste Endabschnitt 2 dieses Hohlstabs 1 ist an seinem freien Ende einerseits durch eine starre Endwand 21 abgeschlossen, an der ein Schlagkopf in Form einer Stahlkugel 22 fest angebracht ist, wobei dieser Endabschnitt 2 andererseits mit einem Messer 24 ausgerüstet ist, das zum raschen Durchschneiden der gespannten Sicherheitsgurte im Notfall dient.

Zu diesem Zweck ist das Messer 24 zwischen der Seitenwand des Endabschnitts 2 und einem abgerundeten Clip 25 angeordnet und mit diesem mittels zwei Schrauben 26 (Fig. 2) an dieser Seitenwand befestigt.

Dieses Messer 24 besteht im wesentlichen aus einer Klinge in Form einer dreieckigen Platte mit einer von der Endwand abgekehrten Schnittfläche, die im Spalt zwischen dem Clip 25 und der Seitenwand des Endabschnitts 2 angeordnet ist, wobei dieser Spalt so bemessen ist, dass er ein rasches Einführen eines gespannten Sicherheitsgurtes ermöglicht, so dass die Gurte im Notfall sofort zerschnitten werden können.

Wie insbesondere aus Fig. 1 und 3 ersichtlich, ist im Endabschnitt 2 ferner eine längliche, zentrale Kammer 27 und eine koaxiale, ringförmige Kammer bzw. Ringkammer 28 vorgesehen. Diese koaxialen Kammern 27 und 28 sind einerseits durch eine zylindrische Trennwand 29 voneinander abgesondert, die hier aus einem Teil mit der Endwand 21 besteht, wobei der Umfang der Ringkammer 28 andererseits durch die Wandung eines zylindrischen Hohlraums im Endabschnitt 2 begrenzt ist. Die Länge des Endabschnitts 2 bzw. der Ringkammer 28 und deren Breite sind einerseits speziell so bemessen, dass diese Ringkammer 28 ein aufgerolltes Unfallprotokoll 82 aufnehmen kann, das in Fig. 1 und 3 durch gestrichelte Linien nur schematisch dargestellt ist.

Andererseits sind der Durchmesser und die Länge der zylindrischen Trennwand 29 (bzw. des Endabschnitts 2) so bemessen, dass in der zentralen Kammer 27 ein spezielles, faltbares bzw. zusammenleg- oder schiebbares Warndreieck 71 untergebracht werden kann.

Dieses Warndreieck 71 ist in Fig. 1 schematisch dargestellt und kann zum Beispiel auf ähnliche Weise wie ein Regenschirm speziell ausgelegt werden, der sowohl der Länge als der Breite nach zusammenlegbar ist, in der zentralen Kammer 27 untergebracht und nach dessen Entfernung zu einem Warndreieck ausgebreitet werden, das vorteilhaft eine dreiseitige Pyramide bildet, die in verschiedenen Lagen stabil und gut sichtbar bleibt.

Dieses spezielle Warndreieck kann jedoch jede geeignete, zusammenlegbare Form aufweisen, solange es im ausgebreiteten Zustand den gesetzlichen Normen entspricht.

Wie aus Fig. 1 und 3 ersichtlich, sind ferner in der Wandung des Endabschnitts 2, ausserhalb der Ringkammer 28 bzw. in den Ecken des Vierkantprofils des Hohlstabs, vier Längsbohrungen 15 (siehe Fig. 3) vorgesehen, die so bemessen sind, dass sie die Aufbewahrung von (nicht gezeigten) Ölkreiden bzw. Stiften und einer kleinen Lampe für die Unfallaufnahme ermöglichen.

Fig. 3 zeigt insbesondere, dass die Seitenflächen des Endabschnitts 2 bzw. des gesamten Hohlstabs 1 nach aussen gewölbt bzw. als Handgriff ausgebildet sind, um die Handhabung des Hohlstabs zu erleichtern.

Wie aus Fig. 1 ersichtlich, ist ein zweiter Endabschnitt 6 des Hohlstabs 1 in Form einer nur durch gestrichelte Linien schematisch dargestellten, speziellen Blinkleuchte oder Blitzleuchte 61 ausgelegt, die insbesondere dem Profil des Hohlstabs 1 angepasst ist und mit Hilfe von geeigneten, schematisch dargestellten Verbindungselementen 56 mit dem angrenzenden Abschnitt 5 fest verbunden wird. Diese Verbindungselemente 56 sind ferner so vorgesehen, dass die Leuchte 61 vom Hohlstab 1 leicht abgenommen und im Notfall sofort benutzt werden kann. Diese spezielle Blinkleuchte 61 kann mit eingebauten Batterien betrieben werden oder ansonsten mit einem Kabel mit Stecker zum Anschluss an den Zigarrenanzünder des Fahrzeuges versehen werden.

Die Notausrüstung nach Fig. 1 umfasst ferner im mittleren Abschnitt 3 eine sehr kleine, spezielle Einweg-Kamera 31 mit Blitzlicht, die ebenfalls der Form des Hohlstabs 1 angepasst und mit Hilfe von geeigneten, schematisch dargestellten Verbindungselementen 23 und 34 mit den angrenzenden Abschnitten 2 und 4 fest verbunden ist, so dass der Hohlstab 1 als ganzes einen starren Körper mit ausreichender Festigkeit bilden kann.

Diese Verbindungselemente 23 und 34 sind ebenfalls so vorgesehen, dass diese spezielle Einweg-Kamera 31 vom Hohlstab 1 leicht abgenommen und im Notfall zur Unfallaufnahme sofort benutzt werden kann.

Die Notausrüstung nach Fig. 1 umfasst ferner im Abschnitt 5 eine Messbandrolle 51, die ebenfalls der Form des Hohlstabs 1 angepasst und mit den angrenzenden Abschnitten des Hohlstabs 4 und 6 mittels Verbindungselementen 45 und 56 fest verbunden ist, wobei diese ebenfalls so vorgesehen sind, dass diese Messbandrolle 51 vom Hohlstab 1 leicht abgenommen und im Notfall zur Unfallaufnahme sofort benutzt werden kann.

Fig. 4 zeigt ein Beispiel eines Verbindungselements 23 in Form einer Platte, die den ersten Endabschnitt 2 des Hohlstabs abdeckt, einen ringförmigen Einschnitt 29a für die Aufnahme der Stirnseite der zylindrischen Trennwand 29 aufweist, einerseits über vier Zapfen 23a in die entsprechenden Bohrungen 15 des Endabschnitts 2 eingreift und mit diesem fest verbunden und andererseits mit vier Bohrungen 23b zur Aufnahme von entsprechenden, nicht gezeigten Zapfen an der Stirnseite des zweiten Abschnitts 3 so versehen ist, dass dieses Element 23 eine feste Steckverbindung für die Abschnitte 2 und 3 des Hohlstabs ergibt.

Der Hohlstab 1 ist hier ferner mit einem weiteren Abschnitt 4 versehen zur Aufnahme von Medikamenten bzw. anderen gewünschten Hilfsmitteln, die im Notfall nützlich sein könnten.

Aus dieser Beschreibung geht hervor, dass die erfindungsgemässe Notausrüstung in Form eines mehrteiligen Hohlstabs, einerseits zunächst als Werkzeug für die rasche Befreiung der Wageninsassen im Notfall, nämlich zum Durchschneiden der Sicherheitsgurte und Zerschlagen der Fenster benutzt werden kann, wobei sie andererseits zur Bereitstellung und zum Schutz des wichtigsten Materials für eine korrekte Unfallaufnahme dient.

Die erfindungsgemässe Notausrüstung ist vorzugsweise mit leicht lösbaren Verbindungsmitteln zum Anbringen derselben an einem geeigneten Platz im Fahrzeug in Griffnähe des Fahrers bzw. der Mitfahrer versehen.

Man kann ebenfalls den erfindungsgemässen, mehrteiligen Hohlstab vorteilhaft als Warnstab benutzen, wobei zu diesem Zweck eine Leuchtfarbe spiralförmig auf seiner Aussenfläche angeordnet werden kann.

Die Abschnitte des Hohlstabs können mit Befestigungsmitteln jeder geeigneten Art zusammengebaut und miteinander fest verbunden werden. Zu diesem Zweck können nebst den beschriebenen Verbindungselementen auch andere Verbindungen beispielsweise starre Verbindungselemente oder Bandverbindungen mit Druckknöpfen usw. verwendet werden. Dabei kann eine Schlaufe vorgesehen werden, um die Handhabung des Hohlstabs zu erleichtern.

Das erfindungsgemäss vorgesehene Messer könnte ebenfalls, auf ähnliche Weise wie am beschriebenen Clip, an einem seitlichen Knauf angebracht werden, der als Teil der Aussenwandung des Abschnitts 2 vorgesehen ist.

Der erfindungsgemäss vorgesehene Schlagkopf kann auch vorteilhaft aus einer Stahlkappe bestehen, die am ersten Endabschnitt 2, an dessen freie Stirnseite fest angebracht ist, so dass die Fenster im Notfall mit einer Schwingbewegung des Hohlstabs zerschlagen werden können.

## Patentansprüche

1. Notausrüstung für Kraftfahrzeuge mit einem mehrteiligen geschlossenen Hohlkörper und verschiedenem Zubehör zur Benutzung bei Verkehrsunfällen, dadurch gekennzeichnet:
(a) dass der Hohlkörper aus mehreren Abschnitten (2 - 6) besteht, die stirnseitig mit Hilfe von lösbaren Verbindungselementen (23, 34, 45, 56) miteinander fest verbunden sind und einen starren Hohlstab (1) mit einem länglichen hohlen Endabschnitt (2) bilden, wobei dieser Endabschnitt mit einem Schlagkopf (22) und einen Messer (24) derart ausgerüstet ist, dass der starre Hohlstab (1) als ganzes unmittelbar zur raschen Befreiung der Fahrzeuginsassen im Notfall eingesetzt werden kann, indem die Sicherheitsgurte mit diesem Messer (24) durchschnitten und die Fenster des Fahrzeugs mit diesem Schlagkopf (22) zerschlagen werden,
(b) dass dieser längliche Endabschnitt (2) speziell ausgebildet und bemessen ist, um ein zusammengerolltes Unfallprotokoll (82) sowie weiteres spezielles Zubehör für die Unfallaufnahme, insbesondere ein zusammenlegbares Warndreieck (71), Stifte und eine kleine Lampe in diesem Endabschnitt (2) aufzunehmen, wobei dieser Endabschnitt (2) ein offenes inneres Ende aufweist, das für die feste Verbindung mit einem angrenzenden, zweiten Abschnitt (3) des Hohlstabs (1) mittels entsprechender, lösbarer Verbindungselemente (23) sowie für die Entnahme des Unfallprotokolls und des weiteren speziellen Zubehörs für die Unfallaufnahme vorgesehen ist und
(c) dass die einzelnen Abschnitte des Hohlstabs (1) jeweils zum Aufbewahren von verschiedenem speziellen Zubehör zur Verwendung im Notfall durch Lösen der genannten Verbindungselemente vorgesehen sind.

2. Notausrüstung nach Anspruch 1, dadurch gekennzeichnet, dass das Messer (24) auf der Innenseite eines am ersten Endabschnitt (2) befestigten Clips (25) so angebracht ist, dass dieses unter einen gespannten Sicherheitsgurt geschoben werden kann.

3. Notausrüstung nach Anspruch 1 oder 2, dadurch gekennzeichnet, dass der genannte erste Endabschnitt (2) in zwei koaxiale Kammern (27, 28) so unterteilt ist, dass eine äussere, ringförmige Kammer (28) ein eingerolltes Unfallprotokoll und eine zentrale Kammer (27) ein zusammenlegbares Warndreieck aufnehmen kann.

4. Notausrüstung nach Anspruch 3, dadurch gekennzeichnet, dass im genannten ersten Endabschnitt (2) mehrere Längsbohrungen (15) zur Aufnahme von Ölkreiden bzw. Stiften und einer kleinen Lampe ausserhalb der ringförmigen Kammer (28) vorgesehen sind.

5. Notausrüstung nach Anspruch 4, dadurch gekennzeichnet, dass die genannten Längsbohrungen (15) als Element einer Steckverbindung vorgesehen sind.

6. Notausrüstung nach einem der Ansprüche 1 bis 5, dadurch gekennzeichnet, dass eine Messbandrolle einen Abschnitt (5) des Hohlstabs (1) bildet.

7. Notausrüstung nach einem der Ansprüche 1 bis 6, dadurch gekennzeichnet, dass eine Einwegkamera mit Blitzlicht in einem weiteren Stababschnitt (3) untergebracht ist.

8. Notausrüstung nach einem der Ansprüche 1 bis 7, dadurch gekennzeichnet, dass ein weiterer Stababschnitt (6) eine Blinkleuchte oder Blitzleuchte enthält.

## Claims

1. Emergency equipment for motor vehicles, comprising a hollow multi-section body and various accessories for use in traffic accidents, characterized in that:
(a) the hollow body consists of several sections (2 - 6) which are solidly connected to each other end to end by means of detachable connecting elements (23, 34, 45, 56) and form a hollow rigid rod (1) with a hollow elongated end-section (2), this end-section being equipped with a striker (22) and a knife (24) so as to enable direct use of the hollow rigid rod (1) as a whole to free the occupants of the vehicle rapidly in an emergency by cutting the safety belts with this knife (24) and breaking the windows of the vehicle with this striker (22),
(b) this elongated end section (2) is specially formed and dimensioned to accomodate in this end-section (2) a rolled-up accident-reporting form and further special accessories for making an accident report, particulary a folding accident-warning triangle (71), pens or crayons and a small lamp, said end-section (2) comprising an inner open end which is provided for solid connection to an adjacent second section (3) of the hollow rod (1) by means of corresponding detachable connecting elements (23) and also for removing the accident-reporting form and
(c) the individual sections of the hollow rod (1) are provided to keep various special accessories for use in an emergency by detaching said connecting elements.

2. Emergency equipment according to claim 1, characterized in that the knife (24) is mounted inside a clip (25) fixed to the first end-section (2) so that it can be slipped under a tightened safety belt.

3. Emergency equipment according to claim 1 or 2, characterized in that said first end-section (2) is subdivided into two coaxial compartments (27, 28) so that an outer annular compartment (28) can accomodate a rolled-up accident-reporting form and a central compartment (27) can accomodate a folding accident-warning triangle.

4. Emergency equipment according to claim 3, characterized in that several longitudinal bores (15) are provided in said first end-section (2) so as to accommodate oil wax crayons or pens and a small lamp outside the annular compartment (28).

5. Emergency equipment according to claim 4, characterized in that said longitudinal bores (15) are provided so as to form an element of a plug connection.

6. Emergency equipment according to one of the claims 1 to 5, characterized in that a rolled-up measuring tape forms one section (5) of the hollow rod (1).

7. Emergency equipment according to one of the claims 1 to 6, characterized in that a disposable camera with a flashlight is housed in a further rod section (3).

8. Emergency equipment according to one of the claims 1 to 7, characterized in that a further rod section (6) contains a blink lamp or a flash lamp.

## Revendications

1. Equipement de secours pour véhicules à moteur, comportant un corps creux à plusieurs parties et divers accessoires destinés à être employés dans les accidents de la circulation, caractérisé en ce que:
(a) le corps creux est composé de plusieurs sections (2 - 6) qui sont solidement reliées l'une avec l'autre bout à bout par l'intermédiaire d'éléments de fixation détachables (23, 34, 45, 56) et forment une barre creuse, rigide (1) comportant une section d'extrémité allongée, creuse (2), cette section d'extrémité étant munie d'un frappeur (22) et d'un couteau (24) de manère à permettre l'utilsation directe de l'ensemble de la barre creuse (1) pour libérer rapidement les occupants du véhicule en cas d'urgence en coupant les ceintures de sécurité avec ce couteau (24) et en brisant les fenêtres du véhicule avec ce frappeur (22),
(b) cette section d'extrémité allongée (2) est formée et dimensionnée spécialement de manière à pouvoir loger dans cette section d'extrémité (2), un formulaire de constat d'accident enroulé ainsi que divers autres accessoires spéciaux pour dresser un constat d'accident, notamment un triange de signalisation pliable (71), des stylos ou crayons et une petite lampe (2), cette section d'extrémité (2) présentant une extrémité intérieure ouverte prévue pour la liaison solide à une deuxième section adjacente de la barre creuse (1) au moyen d'éléments de fixation détachables correspondants et pour sortir le formulaire de constat d'accident et des autres accessoires pour dresser le constat d'accident et
(c) les sections individuelles de la barre creuse (1) sont prévues pour ranger respectivement divers accéssoires spéciaux destinés à être utilisés en cas d'urgence en détachant les dits éléments de fixation.

2. Equipement de secours selon la revendication 1, caractérisé en ce que le couteau (24) est monté à l'intérieur d'un clip (25) fixé sur la première section d'extrémité (2) de manière qu'il puisse être inséré sous une ceinture de sécurité tendue.

3. Equipement de secours selon la revendication 1 ou 2, caractérisé en ce que ladite première section d'extrémité (2) est divisée en deux compartiments coaxiaux (27, 28) de manière qu'un compartiment annulaire externe (28) puisse loger un formulaire de constat d'accident enroulé et qu'un compartiment central (27) puisse loger un triangle de signalisation pliable.

4. Equipement de secours selon la revendication 3, caractérisé en ce que plusieurs perçages longitudinaux (15) sont prévus dans ladite première section d'extrémité (2), à l'extérieur du dit compartiment coaxial (28), pour loger des craies à l'huile, des stylos ou des crayons et une petite lampe.

5. Equipement de secours selon la revendication 4, caractérisé en ce que les dits perçages longitudinaux (15) sont prévus de manière à former un élément d'un raccord à fiches.

6. Equipement de secours selon l'une des revendications 1 à 5, caractérisé en ce qu'un mètre à ruban enroulé constitue une section (5) de la barre creuse (1).

7. Equipement de secours selon l'une des revendications 1 à 6, caractérisé en ce qu'un appareil photographique à usage unique est logé dans une autre section (3) de la barre creuse (1).

8. Equipement de secours selon l'une des revendications 1 à 7, caractérisé en ce qu'une autre section (6) de la barre contient une lampe clignotante ou une lampe-flash.
